# EUROPÄISCHE PATENTSCHRIFT

(11) **EP 0 856 656 B1**
(45) Veröffentlichungstag und Bekanntmachung des Hinweises auf die Patenterteilung: **06.02.2002**
(21) Anmeldenummer: 97120422.7
(22) Anmeldetag: 21.11.1997
(51) Int. Cl.: F02F 3/00, F16J 1/08

(54) **Kolben für Brennkraftmaschinen**
Piston for combustion engine
Piston pour moteur à combustion

(30) Priorität: 29.01.1997 DE 19703121
(43) Veröffentlichungstag der Anmeldung: 05.08.1998
(73) Patentinhaber: Federal-Mogul Burscheid GmbH, 51399 Burscheid (DE)
(72) Erfinder: Michel, Hans-Albert, Dipl.-Ing., 51379 Leverkusen (DE)

(56) Entgegenhaltungen:
- WO-A-94/07016
- DE-C- 950 763
- US-A- 4 383 509
- US-A- 5 113 817
- US-A- 5 323 744

## Beschreibung

Die Erfindung betrifft einen Kolben für Brennkraftmaschinen mit mindestens zwei Kolbenringnuten, wobei in der kolbenbodenseitigen Nut ein Verdichtungsring und in der kolbenschaftseitigen Nut ein Ölabstreifkolbenring angeordnet ist sowie einer zwischen den Kolbenringnuten angeordneten nur zur Zylinderlauffläche hin offenen Ölauffangnut.

Aus der DE PS 20 26 272 ist ein gattungsgemäßer Kolben zu entnehmen. Die Ölauffangnut erstreckt sich unmittelbar unterhalb des Verdichtungsrings. Im Querschnitt ist die Ölauffangnut rechteckig ausgebildet, wobei der Nutgrund rund ausgebildet ist. Während der Auf- und Abwärtsbewegungen des Kolbens wird die Zylinderlauffläche mit Öl beaufschlagt. Die Ölauffangnut dient als Sammelraum für das von der Zylinderlauffläche abgestreifte Öl. Die Ansammlung von Öl unterhalb des Verdichtungsrings führt aber dazu, daß der Verdichtungsring immer mit Öl beaufschlagt wird, welches dann entlang des über dem Verdichtungsring angeordneten Feuerstegs des Kolbens in den Verbrennungsraum gelangt. Die Folge ist, daß der Ölverbrauch und damit die Abgasemissionen ansteigen.
Um dieses Problem zu beseitigen, wurden bisher Maßnahmen durchgeführt, die auf die Kolbenringe abzielten. Speziell bei Diesel-Brennkraftmaschinen wurden beispielsweise, wie aus der DE PS 31 04 347 zu entnehmen, im Feuerstegbereich L-förmige Kolbenringe eingesetzt.

Der Erfindung liegt die Aufgabe zugrunde, den Ölverbrauch von Brennkraftmaschinen im Hinblick auf die Ausbildung des Kolbens zu verbessern.
Diese Aufgabe wird erfindungsgemäß durch die kennzeichnenden Merkmale des Patentanspruch 1 gelöst.
Durch die besondere Ausbildung und Anordnung der Ölauffangnuten übernehmen die Ölauffangnuten eine Ölregulierung dergestalt, daß bei Abwärtsgang des Kolbens die scharfkantige Flanke eine ölabstreifende Wirkung besitzt und beim Aufwärtsgang des Kolbens die verrundete Flanke das Öl nicht in Richtung des Kolbenbodens schiebt.

Die Erfindung ist anhand eines Ausführungsbeispiels in der Zeichnung dargestellt und wird im folgenden näher erläutert.

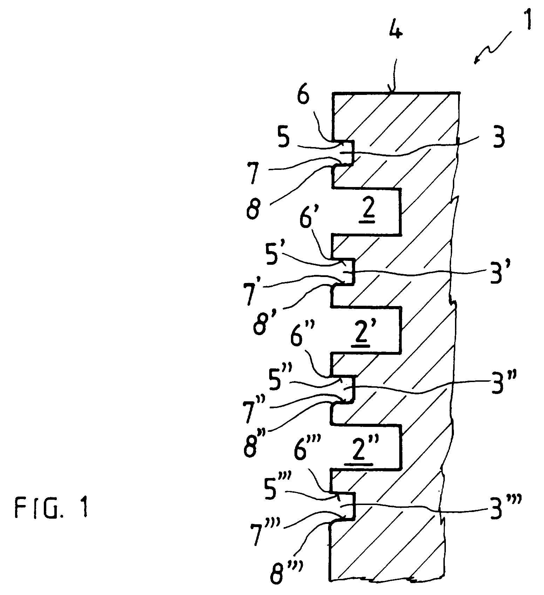

Die Figur 1 zeigt einen Kolben (1) für Brennkraftmaschinen. Der Kolben (1) weist sowohl Kolbenringnuten (2,2',2") als auch Ölauffangnuten (3,3',3",3"') auf.
Die Kolbenringnut (2) ist für einen Verdichtungsring (nicht dargestellt) irgendeiner herkömmlichen Bauart vorgesehen und ist dem Kolbenboden (4) zugekehrt.
Die Kolbenringnut (2") dient zur Aufnahme eines Ölrings (nicht dargestellt) und die Nut (2') eignet sich für einen zweiten Verdichtungsring (nicht dargestellt).
Die Ölauffangnuten (3,3',3'',3''') erstrecken sich ober- und unterhalb einer jeden Kolbenringnut (2,2',2''). Die dem Kolbenboden (4) zugewandten Flanken (5,5',5",5''') (kolbenbodenseitige Flanken) sind zur Zylinderlaufläche (nicht dargestellt) scharfkantig (6,6',6",6"') ausgebildet. Die jeweils gegenüberliegende Flanke (7,7',7",7'") weist eine Verrundung (8,8',8",8"') mit einem Radius R auf.
Durch die besondere Anordnung und Gestaltung der Ölauffangnuten (3,3',3",3"') wird der Ölverbrauch bei ausreichender Schmierung und guter Abdichtung des Brennraumes verbessert. Die Ölauffangnuten (3,3',3",3"') insbesondere die scharfkantigen Flanken (7,7',7",7"') fungieren zusätzlich zum Ölabstreifkolbenring als Ölabstreifmittel.

## Patentansprüche

1. Kolben für Brennkraftmaschinen mit mindestens zwei Kolbenringnuten, wobei in der kolbenbodenseitigen Nut ein Verdichtungsring und in der kolbenschaftseitigen Nut ein Ölabstreifring angeordnet ist sowie einer, zwischen den Kolbenringnuten angeordneten nur zur Zylinderlauffläche hin offenen Ölauffangnut, **dadurch gekennzeichnet, daß** mindestens eine Ölauffangnut (3''') unterhalb der Nut (2") für den Ölabstreifkolbenring und mindestens eine Ölauffangnut (3) oberhalb der Nut (2) für den Verdichtungsring angeordnet ist, und daß die kolbenbodenseitigen Flanken (5,5',5",5"') der Ölauffangnuten (3,3',3",3"') zur Zylinderlauffläche hin scharfkantig (6,6',6'',6''') ausgebildet sind und die kolbenschaftseitigen Flanken (7,7',7",7"') der Ölauffangnuten (3,3',3",3"') zur Zylinderlauffläche eine Verrundung (8,8',8",8"') mit einem Radius R größer 0,1 mm aufweisen.

2. Kolben nach Anspruch 1, **dadurch gekennzeichnet, daß** zwischen Verdichtungsring und Ölabstreifring ein zweiter Verdichtungsring angeordnet ist und daß ober- und/oder unterhalb des zweiten Verdichtungsrings Ölauffangnuten (3',3") angeordnet sind.

## Claims

1. Piston for internal combustion engines which has at least two piston ring grooves, a compression ring being disposed in the groove on the side of the piston head and a scraper ring in the groove on the side of the piston skirt, and which has an oil trap groove disposed between the piston ring grooves and only open towards the cylinder face, **characterised in that** at least one oil trap groove (3''') is disposed below the groove (2") for the scraper ring and at least one oil trap groove (3) is disposed above the groove (2) for the compression ring, and **in that** the piston head side flanks (5,5',5",5''') of the oil trap grooves (3,3',3",3''') are configured sharpedged (6,6',6",6''') towards the cylinder face and the piston skirt side flanks (7,7',7",7''') of the oil trap grooves (3,3',3",3''') have towards the cylinder face a rounded portion (8,8',8",8"') which has a radius R greater than 0.1 mm.

2. Piston according to claim 1, **characterised in that** between compression ring and scraper ring is disposed a second compression ring, and **in that** oil trap grooves (3',3") are disposed above and/or below the second compression ring.

## Revendications

1. Piston pour moteur à combustion interne comprenant au moins deux rainures annulaires de piston, dans lequel un segment de compression est disposé dans la rainure située du côté du fond du piston et un segment racleur d'huile est disposé dans la rainure située du côté de l'arbre du piston, une rainure collectrice d'huile ouverte uniquement vers la surface de course du cylindre étant en outre disposée entre les rainures annulaires de piston, **caractérisé en ce qu'**au moins une rainure collectrice d'huile (3"') est disposée en dessous de la rainure (2") pour le segment de piston racleur d'huile et au moins une rainure collectrice d'huile (3) est située au-dessus de la rainure (2) pour le segment de compression, et **en ce que** les flancs (5, 5', 5", 5''') des rainures collectrices d'huile (3, 3', 3", 3''') situées du côté du fond du piston sont réalisées avec des arêtes vives (6, 6', 6", 6"') par rapport à la surface de course du cylindre et les flancs (7, 7', 7", 7''') des rainures collectrices d'huile (3, 3', 3", 3"') situées du côté de l'arbre du piston présentent un arrondi (8, 8', 8", 8''') ayant un rayon R supérieur à 0,1 mm.

2. Piston selon la revendication 1, **caractérisé en ce qu'**un deuxième segment de compression est situé entre le segment de compression et le segment racleur d'huile et **en ce que** des rainures collectrices d'huile (3', 3") sont disposées au-dessus et/ou en dessous du deuxième segment de compression.
